(19) Europäisches Patentamt
European Patent Office
Office européen des brevets

(11) Veröffentlichungsnummer: **0 469 240 A2**

# (12) EUROPÄISCHE PATENTANMELDUNG

(21) Anmeldenummer: **91105998.8**

(22) Anmeldetag: **16.04.91**

(51) Int. Cl.[5]: **C08J 5/08**, C03C 25/02, C08K 7/14, C08K 9/06, //C08L77:02

(30) Priorität: **05.07.90 DE 4021393**

(43) Veröffentlichungstag der Anmeldung: **05.02.92 Patentblatt 92/06**

(84) Benannte Vertragsstaaten: **BE CH DE ES FR GB IT LI NL SE**

(71) Anmelder: **Degussa Aktiengesellschaft**
**Weissfrauenstrasse 9**
**W-6000 Frankfurt am Main 1(DE)**

(72) Erfinder: **Lechner, Ulrike, Dr.**
**Kirschäcker Weg 3**
**W-8000 München 60(DE)**
Erfinder: **Krüdener, Rudolf, Prof.**
**Rossbergring 59**
**W-6107 Reinheim(DE)**

## (54) Mit silanisierten Glasfasern verstärktes Polyamid, silanisierte Glasfasern und Verfahren zu deren Herstellung.

(57) Die Erfindung betrifft durch aktivierte anionische Polymerisation von Lactamen hergestellte Polyamide, die mit Glasfasern verstärkt werden.

Zur Verbesserung der Haftung zwischen Kunststoff und Glasfasern wird deren Oberfläche mit Organosiliciumverbindungen modifiziert.

EP 0 469 240 A2

Die Erfindung betrifft mit silanisierten Glasfasern verstärktes, durch aktivierte anionische Polymerisation von Lactamen hergestelltes Polyamid, diese Glasfasern und Verfahren zu deren Herstellung.

Für die Herstellung von Konstruktionsteilen aus faserverstärkten Kunststoffen wird in zunehmendem Maße thermoplastisches Material verwendet. Der Vorteil gegenüber dem duroplastischen Werkstoff liegt hauptsächlich in der höheren Schlagzähigkeit und in der relativ guten Wiederaufarbeitbarkeit.

Aus Kostengründen werden vorwiegend Glasfasern in verschiedenster Form und Menge eingearbeitet. Nach Möglichkeit sollten die Grenzflächenbindungen zwischen dem anorganischen Fasermaterial und dem organischen Matrixmaterial über eine chemische Reaktion erfolgen. Zu dem Zweck werden als Haftvermittler vorwiegend monomere Siliciumverbindungen, Silane, verwendt.

Für Polyamide werden im allgemeinen Glasfaserprodukte angeboten, die mit primären Aminosilanen als Haftvermittler behandelt sind. Sinnvoll ist die Verwendung solcher mit Aminosilanen behandelten Glasfasern allerdings nur für die Verstärkung von Polyamiden (PA), die mittels hydrolytischer Polymerisation gewonnen werden. Verwendet man so silanisierte Fasern in PA-Konstruktionsteilen oder PA-Prepregs, die mittels aktivierter anionischer Polymerisation hergestellt werden, treten häufig Schwierigkeiten auf. Einerseits ist die aktivierte anionische Polymerisation von Lactamen sehr feuchtigkeitsempfindlich, andererseits wird das hydrophile Verhalten der Glasfilamente durch das hydrophile Aminosilan noch verstärkt. Bei der lagerung und Verarbeitung müssen so vorbehandelte Fasern streng vor Feuchtigkeit geschützt werden. Bereits bei mittlerer Luftfeuchtigkeit ist an der Faseroberfläche soviel Wasser adsorbiert, daß die Polymerisation an der Fasergrenzfläche unvollständig abläuft und damit durch verbleibende Monomeranteile die Brückenbildung Glasfaser - Haftvermittler - Polymermatrix gestört wird. Durch die relativ starke Polymerisationsschwindung ergeben sich dann um die Fasern herum Hohlräume, so daß in diesem
Bereich keine Kraftübertragung stattfinden kann. Die Fasern wirken nicht mehr verstärkend, sondern schwächend, da sich Lunker bilden.
Die Verwendung von unbehandelten oder entsilanisierten Fasern bietet keine Lösung für dieses Problem.

Es ergibt sich somit die Aufgabe, einen Haftvermittler bereitzustellen, der sowohl brückenbildend als auch hydrophobierend wirkt.

Gegenstand der Erfindung ist ein durch Glasfasern verstärktes, durch aktivierte anionische Polymerisation von Lactamen hergestelltes Polyamid, das dadurch gekennzeichnet ist, daß die Oberfläche der Glasfasern mit einer Verbindung der allgemeinen Formeln

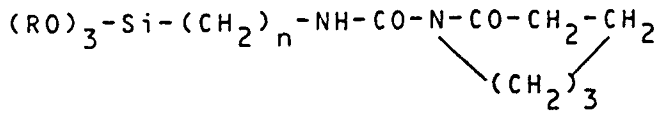

(I)

und/oder

$$\left[(RO)_3-Si-(CH_2)_n\right]_2NH \qquad (II)$$

in der Wärme silanisiert ist, in denen bedeuten

n: eine ganze Zahl von 2 bis 6, bevorzugt 3 bis 4,

R: Alkylrest mit 1 bis 4 Kohlenstoffatomen.

Die Verbindungen gemäß Formel (I) sind nach dem in der EP-PS 0212 056 beschriebenen Verfahren zugänglich, die gemäß formel (II) schon seit längerem allgemein bekannt.

Die aktivierte ionische Polymerisation von Lactamen ist ein seit langem bekanntes Verfahren zur Herstellung von Polyamiden
(K. Schneider, Kunststoffe, 55, (1965) 315-316; H. Hemmel et al., Kunststoffe, 59, (1969) 405-408).

Bevorzugt geht man so vor, daß man der auf eine Temperatur zwischen 110 und 150 °C erhitzten, einen geeigneten Aktivator enthaltenden Monomerschmelze, die im günstigsten Fall auf eine im gleichen Bereich liegende Temperatur erwärmten, mit einer der Verbindungen gemäß den Formeln (I) und/oder (II) silanisierten Glasfasern, vorteilhafterweise in Abmischung mit einer einen geeigneten Katalysator enthaltenden Lactamschmelze zusetzt.

Um ein Absinken der Fasern in der Schmelze zu verhindern, erweist es sich als vorteilhaft, dieser gleichzeitig, vorher oder in Abmischung mit den Glasfasern 0,5 bis 2,5 Gew.-%, bezogen auf die Schmelze einer pyrogen hergestellten Kieselsäure (Aerosil (R)) insbesondere einer hydrophobierten (z. B. Aerosil (R) R972), mit einer spez. Oberfläche von 50 bis 300 $m^2/g$ (gemessen nach BET mit $N_2$) zuzusetzen.

Anschließend läuft dann in Gegenwart des alkalischen Katalysators, wie z. B. Natriumcaprolactamat und des Aktivators die aus dem Stand der Technik bekannte Polymerisation ab.

Als Aktivatoren werden Verbindungen aus der Gruppe der Isocyanate, Carbodiimide, N-substituierte Cyanamide verwendet. Besonderes Augenmerk fällt dabei auf das Arbeiten mit Polyisocyanaten und Isocyanatabspaltern.

Gegenstand der Erfindung sind ebenso Glasfasern zur Verstärkung von durch aktivierte anionische Polymerisation hergestelltem Polyamid, die dadurch gekennzeichnet sind, daß sie an der Oberfläche mit einem Organosilan der allgemeinen Formeln (I) und/oder (II) modifiziert sind.

Hergestellt werden derartig modifizierte Glasfasern mit Hilfe eines Verfahrens zur Oberflächenbehandlung, bei dem man die z. B. in Form eines Gewebes vorliegende Glasfasern bei 5 bis 40 °C, insbesondere 20 bis 25 °C mit einer Lösung benetzt, die 0,01 bis 10, bevorzugt 0,01 bis 1 Gew.-% eines Organosilans gemäß Formeln (I) und/oder (II), bezogen auf die Gesamtmenge von Faser oder Gewebe, enthält.

Als Lösungsmittel geeignet sind polare Verbindungen wie zum Beispiel Alkohole, insbesondere Methanol, Äthanol, Petroläther, Isopropanol, Kristallöle und Benzin.

Die Benetzung kann durch Besprühen oder Eintauchen vorgenommen werden.

Nach einer Tränkzeit von 1 bis 120 min läßt man das feuchte Gewebe im allgemeinen bei Temperaturen zwischen 20 und 60 °C vortrocknen und schließt dann eine Behandlung bei > 60 bis 120 °C an, die vorteilhaft 0,1 bis 15 h dauert.

Gegenstand der Erfindung sind ebenso die auf diesem Wege gewonnenen Glasfasern, die im allgemeinen einen Organosilangehalt von 0,01 bis 10, insbesondere 0,01 bis 1,0 Gew.-% aufweisen, bezogen auf die behandelte Faser.

Der Gewichtsanteil der Fasern in dem verstärkten Polyamid beläuft sich auf im allgemeinen 30 bis 60 %, bevorzugt 50 bis 51 Gew.-%, bezogen auf die Summe von Polymer und Glasfaser.

Es wurde nun gefunden, daß die erfindungsgemäße Behandlung der Glasfasern mit den Organosilanen gemäß den Formeln (I) und/oder (II) zu einer deutlichen Verbesserung der Haftung zwischen Polymer und Faser führen.

Dies zeigte sich im Verlauf von Biege- und Zugversuchen.

Die Ursache liegt in der besseren Benetzung der erfindungsgemäß behandelten Fasern und ihrer besseren Einbindung in die Polymermatrix.

Rasterelektronenmikroskop-Aufnahmen zeigen den deutlichen Unterschied zur bekannten Verwendung des $\gamma$-Aminopropyltriethoxysilans.

In diesem Fall bilden sich merkliche Hohlräume rund um die Faser, die die Festigkeit beeinträchtigen, während dies erfindungsgemäß vermieden wird.

Aufgrund der Hohlräume sind die Festigkeitseigenschaften der erstgenannten verstärkten Polyamide schlechter als die von Polyamiden, die mit unbehandelten oder entsilanisierten Glasfasern verstärkt werden.

## Beispielteil

### 1. Herstellung der Probekörper

Die vorgesehene Caprolactammenge wird auf zwei Gefäße verteilt aufgeschmolzen und auf 110 bis 120 °C erwärmt. In das Gefäß mit der größeren Lactammenge wird der Aktivator gegeben und mitaufgeschmolzen. In das andere Gefäß wird der Katalysator gegeben und ebenfalls mitaufgeschmolzen. Nachdem in die Aktivatorschmelze Kieselsäure (Aerosil R972) und Kurzglasfasern eingerührt und die Schmelzen auf 125 °C erwärmt wurden, werden diese gemischt und in die auf 150 °C erwärmte Form gegossen.

Nach einer Abkühlzeit von zwei bis drei Stunden können die Zugproben aus der teilbaren Form entnommen und entsprechend den Zugversuchsbedingungen konditioniert werden.

Beispiel für die Zusammensetzung einer Schmelze:

| | |
|---|---|
| 370 g | $\epsilon$ -Caprolactam |
| 14 g | Katalysator |
| 11 g | Aktivator |
| 5 g | Aerosil R 972 |
| 120 g | Kurzglasfasern (30 Gew.-% bezogen auf Matrix) |

### Verwendete Substanzen

a) $\epsilon$-Caprolactam in Schuppen

b) Katalysator: Natriumcaprolactamat
c) Aktivator: Caprolactam-N-carbonsäure-hexamethylendiamid-1,6
d) Organosilan: Si 252, Bis-(3-triethoxysilylpropyl)amin
Si 254, N-[(3-Triethoxysilylpropyl) carbamoyl)] caprolactam
e) hydrophobe Kieselsäure R 972 Aerosil (R) (120 $m^2/g$)
f) Kurzglasfaser MF 7901 (BAYER AG)
Faserlänge 100 - 300 um, Durchmesser 14 um
g) Langglasfaser (ROVING), (VETROTEX)

2. Testverfahren

a) Biegeversuche (DIN 53 542)
b) Zugversuch (DIN 53 455)
Die Prüfungen werden an trocken gelagerten (22 °C, 63 % rel. Feucht) Proben durchgeführt.

Versuchsdurchführung

Auftragen der Silane

Es wird eine 0,5 Gew.-%ige Silanlösung in Isopropanol, bezogen auf die zu silanisierende Glasfasermenge, hergestellt.

Danach folgen 30 min Tränkzeit in der Lösung mit Trocknungszeiten von 60 min. bei einer Raumtemperatur von 22 °C und 63 % rel. Feuchte, sowie 120 min in einem Wärmeluftofen bei 120 °C. Während der ersten Trocknungsphase werden die silanisierten Glasfasern auf ein Fließpapier gelegt.

Versuchsergebnisse

Die Versuchsergebnisse (Tabelle 1) zeigen die Verbesserung der mechanischen Kenngrößen bei der Verwendung der erfindungsgemäß silanisierten Glasfasern (GF) (0,5 %ige Lösung) im Vergleich zum Einsatz nicht behandelter Fasern.

Die Versuche 1 bis 3 wurden mit einem Gehalt von
30 Gew.-% Kurzglasfasern, die Versuche 4 und 5 mit
30 Gew.-% Langglasfasern (Roving) durchgeführt.
Tabellen 1 und 2
siehe nächste Seite

Tabelle 1

| Probe | max. Zugkraft ( N ) | Zugfestigkeit ( $N/mm^2$) | Dehnung ( % ) |
|---|---|---|---|
| 1 GF unbehandelt | 4157 | 68,7 | 1,41 |
| 2 GF + Si 252 | 4636 | 76,6 | 1,62 |
| 3 GF + Si 254 | 4810 | 80.3 | 1,77 |
| 4 Roving + Si 252 | 5520 | 91.8 | 1,22 |
| 5 Roving + Si 254 | 6340 | 104,6 | 1,46 |

Tabelle 2
Prozentuale Verbesserung in den einzelnen Bereichen

| Probe | max. Zugkraft ( %) | Zugfestigkeit ( %) | Dehnung ( %) |
|---|---|---|---|
| 1 | | | |
| 2 | 12,0 | 12,4 | 15 |
| 3 | 16 | 17 | 26 |
| 4 | 33 | 34 | 87 |
| 5 | 53 | 52 | 4 |

## Patentansprüche

1. Mit silanisierten Glasfasern verstärktes, durch aktivierte anionische Polymerisation von Lactamen hergestelltes Polyamid,

dadurch gekennzeichnet, daß die Oberfläche der Glasfasern mit einer Verbindung der allgemeinen Formeln

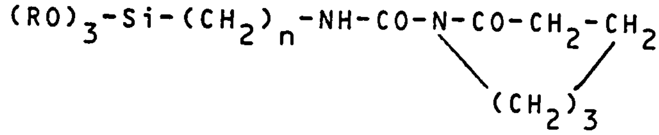 (I)

und/oder

$$[(RO)_3-Si-(CH_2)_n]_2NH \quad (II)$$

in der Wärme silanisiert ist, in denen bedeuten

n: eine ganze Zahl von 2 bis 6,

R: einen Alkylrest mit 1 bis 4 Kohlenstoffatomen.

**2.** Verfahren zur Herstellung von mit silanisierten Glasfasern verstärktem Polyamid gemäß Anspruch 1, dadurch gekennzeichnet, daß man der auf 110 bis 150 °C erhitzten, einen geeigneten Aktivator enthaltenden Lactamschmelze einen geeigneten Katalysator und die silanisierten Glasfasern zusetzt und die Polymerisation in an sich bekannter Weise ablaufen läßt.

**3.** Verfahren zur Herstellung gemäß Anspruch 2, dadurch gekennzeichnet, daß man die silanisierten Glasfasern vor der Einarbeitung in die Schmelze auf deren Temperatur aufheizt.

**4.** Verfahren zur Herstellung gemäß den Ansprüchen 2 oder 3,
dadurch gekennzeichnet, daß man der Schmelze 0,5 bis 2,5 Gew.-% einer pyrogen hergestellten Kieselsäure zusetzt.

**5.** Silanisierte Glasfasern zur Verstärkung von Polyamid,
dadurch gekennzeichnet, daß die Oberfläche der Glasfasern mit einer Verbindung der allgemeinen Formeln

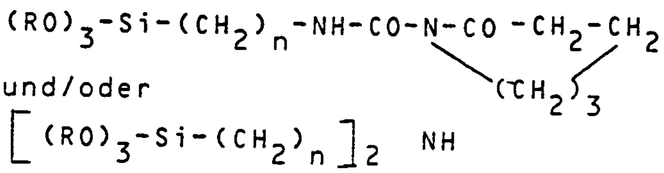 (I)

und/oder

$$[(RO)_3-Si-(CH_2)_n]_2 \ NH \quad (II)$$

in der Wärme silanisiert ist, in denen bedeuten

n: eine ganze Zahl von 2 bis 6

R: einen Alkylrest mit 1 bis 4 Kohlenstoffatomen.

**6.** Verfahren zur Herstellung von silanisierten Glasfasern gemäß Anspruch 5,
dadurch gekennzeichnet, daß man die Glasfasern

1. bei 5 °C bis 40 °C mit einer Lösung benetzt, die 0,01 bis 10 Gew.-% einer Verbindung gemäß den Formeln (I) und/oder (II) enthält, bezogen auf die Menge der Glasfasern,
2. nach einer Tränkzeit von 1 bis 120 min die feuchten Glasfasern bei Temperaturen zwischen 20 °C und 60 °C vortrocknet und
3. anschließend 0,1 bis 15 h bei Temperaturen von > 60 °C bis 120 ° nachtempert.

**7.** Verfahren zur Herstellung gemäß Anspruch 6, dadurch gekennzeichnet, daß man Kurzglasfasern, Langglasfasern (Rovings) oder Gewebe verwendet.